# EUROPEAN PATENT SPECIFICATION

(11) **EP 1 907 737 B1**
(45) Date of publication and mention of the grant of the patent: **27.05.2009**
(21) Application number: 06777871.2
(22) Date of filing: 20.07.2006
(51) Int. Cl.: F16K 31/08, F16K 31/40, A01G 25/16

(54) **LIQUID FLOW VALVE WITH A BISTABLE ELECTROMAGNETIC CONTROL ASSEMBLY**
FLÜSSIGKEITSSTRÖMUNGSVENTIL MIT EINER BISTABILEN ELEKTROMAGNETISCHEN STEUERANORDNUNG
VANNE D'ECOULEMENT DE LIQUIDE EQUIPEE D'UN ENSEMBLE DE COMMANDE ELECTROMAGNETIQUE BISTABLE

(30) Priority: 21.07.2005 IT MI20051404
(43) Date of publication of application: 09.04.2008
(73) Proprietor: R.P.E. S. r. l., 22070 Carbonate (IT)
(72) Inventor: BERLUSCONI, Giordano, I-22070 Veniano (IT)
(74) Representative: Jorio, Paolo
(86) International application number: PCT/EP2006/064477
(87) International publication number: WO 2007/010026

(56) References cited:
- EP-A- 0 717 220
- EP-A- 1 416 207
- DE-U1- 20 000 397
- US-A- 4 948 090
- US-A- 6 076 550

## Description

### TECHNICAL FIELD

The present invention relates to a liquid flow on-off valve with a bistable electromagnetic control assembly.

More specifically, the present invention relates to a membrane-type liquid flow on-off valve with a bistable electromagnetic control assembly, wherein the membrane has a liquid flow orifice, so that the pressure of the liquid itself keeps the valve closed.

### BACKGROUND ART

A valve of this type is illustrated in Patent Application EP 1,416,207. More specifically, the liquid flow on-off valve with a bistable electromagnetic control assembly described in Patent Application EP 1, 416,207 comprises an auxiliary channel; and an auxiliary shutter, which is activated by the electromagnetic control assembly to selectively cut off flow along the auxiliary channel. The electromagnetic control assembly, in turn, comprises a yoke; a coil; a core inside the coil; an armature movable between a first stable position contacting the core, and a second stable position a given distance from the core; and a permanent magnet for generating electromagnetic flux along the yoke, the core, and the armature.

The coil is supplied with pulses of opposite polarity. A pulse of a first polarity moves the armature into the first stable position, in which it is held by the electromagnetic flux generated by the permanent magnet located directly over the core. And a pulse of a second polarity, opposite the first, moves the armature into the second stable position, in which it is held by a compression spring located between the core and the armature. The force exerted by the spring must be calibrated precisely for the armature to be held contacting the core by the force of the magnetic flux generated by the permanent magnet, and, at the same time, must be capable of overcoming the force of the magnetic flux generated by the permanent magnet, when the armature is in the second stable position. Bearing in mind that the travel of the armature of a valve of the type described is measurable in tenths of a millimetre, selecting the right spring is obviously a difficult task. Moreover, the slightest mechanical shock may move the armature from the first to the second stable position, and vice versa, even with no pulse being supplied to the coil.

Another type of liquid flow on-off valve with a bistable electromagnetic control assembly is disclosed in EP 0,717,220 A1, according to which the yoke comprises a first portion fitted about the coil and defining, in use, a first and a second magnetic pole; and a second portion separated from the first portion by a permanent magnet and defining a third magnetic pole. The first, second, and third magnetic pole are arranged successively along said axis, from the core towards the armature. Despite the provision of three magnetic poles, the above-identified liquid flow on-off valve still needs a spring to keep the valve in one of the two stable positions.

In document US 4,948,090 is disclosed a flow on-off valve with a bi-stable electromagnetic control assembly without spring and comprising two coils and two permanent magnets. As a consequence, the above-identified liquid flow on-off valve is complicated and expensive.

### DISCLOSURE OF INVENTION

It is an object of the present invention to provide a liquid flow on-off valve with a bistable electromagnetic control assembly, designed to eliminate the drawbacks of the known art.

According to the present invention, there is provided a liquid flow on-off valve with a bistable electromagnetic control assembly, the valve being characterized in that the first magnetic pole faces the core, the second magnetic pole faces the armature, and the third magnetic pole faces neither the core nor the armature so that the first and second stable position are maintained solely by the magnetic flux generated by the permanent magnet and conducted selectively through the yoke, the core, and the armature as a function of the position of the armature

### BRIEF DESCRIPTION OF THE DRAWINGS

Preferred embodiments, of the invention will be described by way of example with reference to the accompanying drawings, in which:
Figure 1 shows an enlarged longitudinal section, with parts removed for clarity, of a valve set to a second stable position and in accordance with a first embodiment of the present invention;
Figure 2 shows a longitudinal section of the Figure 1 valve in a first stable position;
Figure 3 shows an enlarged longitudinal section, with parts removed for clarity, of a valve set to the second stable position and in accordance with a second embodiment of the present invention;
Figure 4 shows a larger-scale longitudinal section, with parts removed for clarity, of a detail in Figure 1.

### BEST MODE FOR CARRYING OUT THE INVENTION

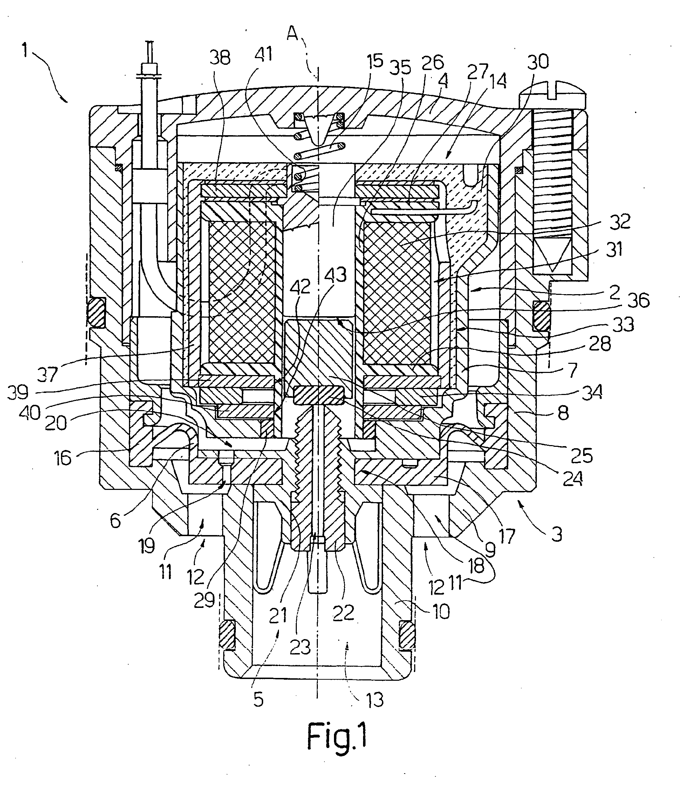

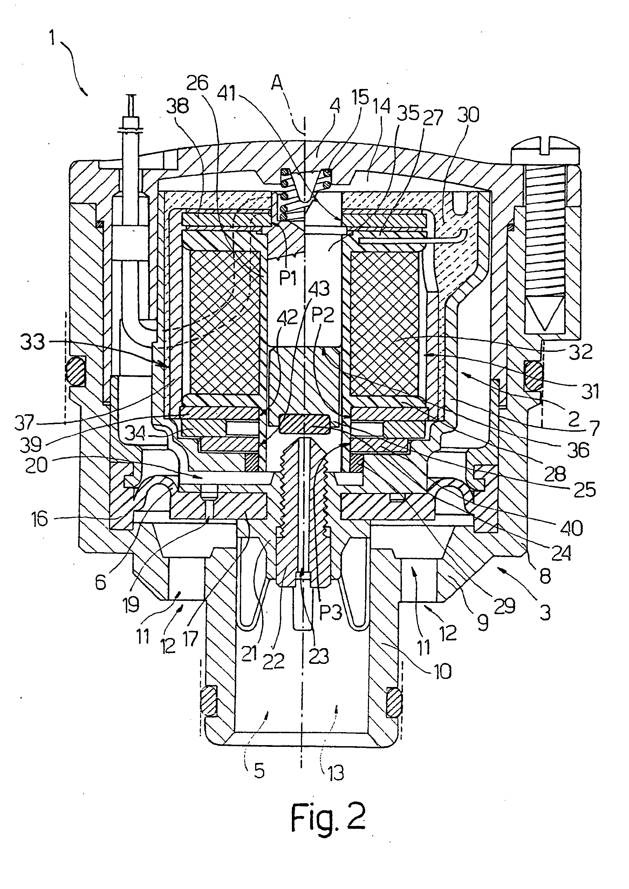

With reference to Figures 1 and 2, number 1 indicates as a whole a liquid flow on-off valve with a bistable electromagnetic control assembly 2, so that valve 1 is kept open (first stable position, Figure 2) or closed (second stable position, Figure 1) with no electric power to electromagnetic control assembly 2.

Valve 1 extends along an axis A, and comprises a valve body 3; a cover 4 fitted to valve body 3; a shutter 5 movable along axis A; and a membrane 6 fixed to valve body 3 and shutter 5. Shutter 5 is integral with a cup-shaped body 7 housing electromagnetic control assembly 2, which therefore moves along axis A together with shutter 5.

Valve body 3 comprises a lateral wall 8; a bottom wall 9 (the terms "lateral" and "bottom" as used herein refer solely to the way in which the valve is shown in the accompanying drawings, it being understood that valve 1 may be oriented any way); and a tube 10 projecting from bottom wall 9.. Openings 11 are formed in bottom wall 9 and define a liquid inlet channel 12, while tube 10 defines an outlet channel 13. Lateral wall 8 is closed by cover 4, which defines, inside valve body 3, a gap 14 communicating at all times with inlet channel 12, regardless of the operating position of valve 1. A compression spring 15 is located between cover 4 and assembly 2, and pushes electromagnetic control assembly 2, cup-shaped body 7 and shutter 5, and membrane 6 onto the end of tube 10 to prevent liquid flow from inlet channel 12 to outlet channel 13 (Figure 1). Membrane 6 is annular, and comprises an outer seal 16 fixed to valve body 3, between lateral wall 8 and bottom wall 9; and an inner seal 17 fixed to shutter 5 and, in the example shown, housed inside a cavity 18 formed between shutter 5 and cup-shaped body 7, which in fact are formed in one piece. Membrane 6 also has three holes 19, which are equally spaced about axis A, are located at corresponding openings 11 at one end, and are connected to one another, at the other end, by an annular channel formed in membrane 6. The annular channel is connected to a channel 20 formed in cup-shaped body 7 and in turn connected to gap 14, so that gap 14 in valve body 3 communicates with inlet channel 12, regardless of the operating position.of valve 1.

Shutter 5 comprises a cylindrical body 21, which slides along axis A inside tube 10; and a central tube 22 defining a channel 23, which can be selectively opened to connect outlet channel 13 to gap 14, and therefore to inlet channel 12. In other words, holes 19, channel 20, gap 14, and channel 23 define an auxiliary channel connecting inlet channel 12 and outlet channel 13, and which can be cut off selectively by an auxiliary shutter 24 controlled by electromagnetic control assembly 2.

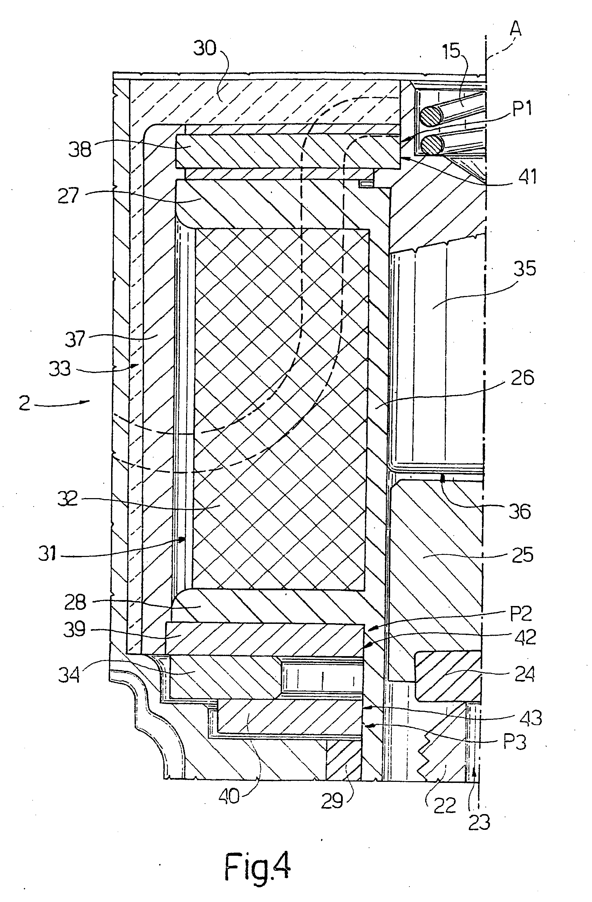

With reference to Figure 4, auxiliary shutter 24 is integral with an armature 25 movable along axis A and forming part of electromagnetic control assembly 2, which comprises a cylindrical body 26, of axis A, having two outer annular flanges 27 and 28. Cylindrical body 26 is made of insulating material, and is fitted to cup-shaped body 7 with a seal 29 and resin 30 to isolate from the liquid a compartment 31 housing a coil 32, a yoke 33, and a permanent magnet 34. Electromagnetic control assembly 2 also comprises a core 35 fixed inside cylindrical body 26 and having a face 36 located along axis A, between flanges 27 and 28. Core 35 and armature 25 are coaxial and housed inside cylindrical body 26. Coil 32 surrounds cylindrical body 26, and is housed between flanges 27 and 28 and a cylindrical wall 37 which forms part of yoke 33. In addition to cylindrical wall 37, yoke 33 also comprises a ring 38 located at flange 27, on the opposite side to coil 32, and contacting one end of cylindrical wall 37; a ring 39 contacting flange 28 and the opposite end of cylindrical wall 37; and a ring 40 surrounding cylindrical body 26 and separated from ring 39 by permanent magnet 34. Rings 38, 39, 40 are bored disks of ferromagnetic material, the respective inner cylindrical faces 41, 42, 43 of which define respective magnetic poles P1, P2, P3. Magnetic pole P1 contacts core 35 directly, while magnetic poles P2, P3 contact the outer face of cylindrical body 26. Magnetic poles P1, P2, P3 are arranged successively along axis A in the direction from core 35 to armature 25. More specifically, the first magnetic pole P1 faces core 35; the second magnetic pole P2 faces armature 25; and the third magnetic pole P3 faces tube 22, and neither core 35 nor armature 25. The distance between magnetic poles P2 and P3 is much smaller than that between magnetic poles P1 and P2.

The exact position of second magnetic pole P2 along axis A is substantially selected as a function of the length of armature 25 along axis A, and so that, when armature 25 is in the first stable position (Figure 2), the magnetic flux through second magnetic pole P2 is negligible with respect to the magnetic flux generated by permanent magnet 34 through first and third magnetic pole P1 and P3; and, when armature 25 is in the second stable position (Figure 1), the magnetic flux through first magnetic pole P1 is negligible with respect to the magnetic flux generated by the permanent magnet through second and third magnetic pole P2 and P3.

Permanent magnet 34 is also in the form of a ring (bored disk), is substantially the same thickness as rings 38, 39, 40, but has an inside diameter substantially larger than the inside diameters of rings 38, 39, 40, and an outside diameter substantially equal to the diameter of ring 39.

Valve 1 in Figure 1 is shown in a second stable position, in which flow between inlet channel 12 and outlet channel 13 is cut off by shutter 5; and flow along the auxiliary channel - defined by gap 14, holes 19 in the membrane, channel 20, and channel 23 - is also cut off by auxiliary shutter 24, which is pressed onto tube 22 by the magnetic flux generated by permanent magnet 24 through magnetic poles P2 and P3 and acting on armature 25. By virtue of holes 19 connecting gap 14 and inlet channel 12, the pressure of the liquid in inlet channel 12 equals the pressure of the liquid in gap 14, and, by virtue of the difference between the surfaces on different sides of membrane 6, keeps shutter 5 in the second stable position.

When a pulse is transmitted to coil 32 to generate magnetic flux concordant with that generated by permanent magnet 34, the total magnetic flux travels through poles P1 and P3, and the flux through magnetic pole P2 becomes negligible. Consequently, armature 25 adheres to core 35, and auxiliary shutter 24 is detached from tube 22 and connects gap 14 to outlet channel 13, so that the pressure in gap 14 falls before the pressure in inlet channel 12, and the liquid acting on membrane 6 overcomes the force of spring 15 and raises cup-shaped body 7 of shutter 5 and electromagnetic assembly 2.

At the end of the pulse to coil 32, which is intrinsically instantaneous, armature 25 is held contacting core 35 by the magnetic flux generated by permanent magnet 34, and which predominantly closes through magnetic poles P1 and P3, whereas the magnetic flux through magnetic pole P2 is negligible. Valve 1 is therefore retained in the first stable position solely by the action of permanent magnet 34.

At this point, a pulse transmitted to coil 32, to generate magnetic flux discordant with respect to that generated by permanent magnet 34, produces magnetic flux through magnetic poles P1 and P2 to detach armature 25 from core 35, while permanent magnet 34 produces magnetic flux between poles P2 and P3 to press armature 25 and auxiliary shutter 24 onto tube 22. At the end of the pulse, the predominant magnetic flux is that acting between poles P2 and P3, so that auxiliary shutter 24 is closed, thus closing and maintaining the second stable position of valve 1.

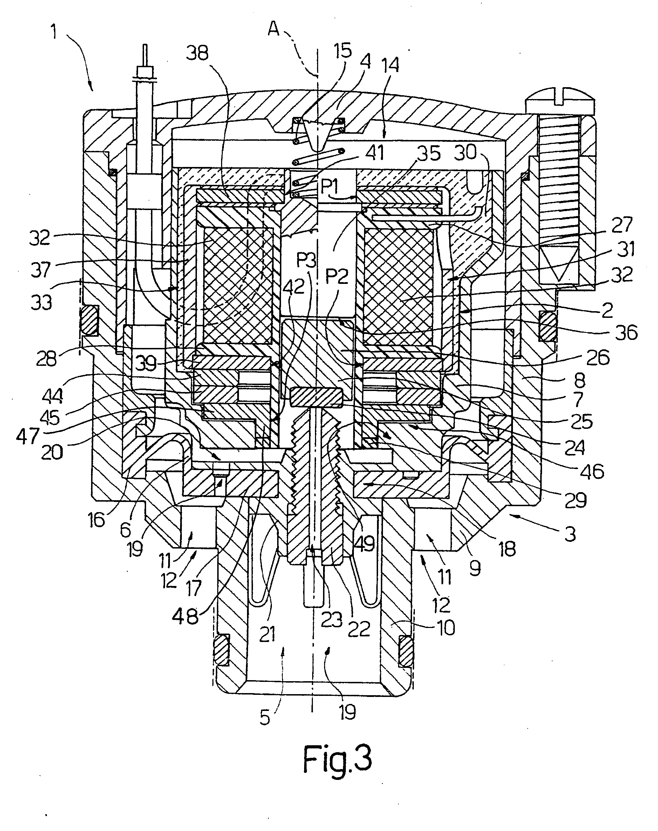

In the Figure 3 embodiment, the same reference numbers as in the above description of the first embodiment are used to indicate the same component parts, except for those differing substantially from the first embodiment. Valve 1 in Figure 3 substantially differs from the Figure 1 valve as regards certain parts of electromagnetic control assembly 2. More specifically, permanent magnet 34 is replaced by two annular permanent magnets 44 and 45 connected along axis A. Magnetic pole P3 is defined by an L-section ring 46 substantially comprising a portion 47 perpendicular to axis A, and a portion 48 coaxial with axis A and having a face 49 extending about axis A and defining third magnetic pole P3. The magnetic flux generated by the two permanent magnets 44 and 45 is greater than that generated by one magnet 34.

## Claims

1. A liquid flow on-off valve with a bistable electromagnetic control assembly (2), the valve comprising an auxiliary channel (14, 19, 20, 23); an auxiliary shutter (24) activated by the electromagnetic control assembly (2) to selectively cut off flow along the auxiliary channel (14, 19, 20, 23); the electromagnetic control assembly (2), in turn comprising a yoke (33); a coil (32) cooperating with said yoke (33); a core (35) inside said coil (32); a permanent magnet (34; 44, 45) cooperating with said yoke (33); and an armature (25) movable, along an axis (A), between a first stable position contacting said core (35), and a second stable position wherein said armature (25) is a given distance from said core (35); the yoke (33) comprising a first portion (37, 38, 39) fitted about said coil (32) and defining, in use, a first and a second magnetic pole (P1, P2); and a second portion (40; 46) separated from the first portion by the permanent magnet (34; 44, 45) and defining a third magnetic pole (P3); the first, second, and third magnetic pole (P1, P2, P3) being arranged successively along said axis (A), from the core (35) towards the armature (25); the valve being **characterized in that** the first magnetic pole (P1) faces the core (35), the second magnetic pole (P2) faces the armature (25), and the third magnetic pole (P3) faces neither the core (35) nor the armature (25) so that the first and second stable position are maintained solely by the magnetic flux generated by the permanent magnet (34; 44, 45) and conducted selectively through the yoke (33), the core (35), and the armature (25) as a function of the position of the armature (25).

2. A valve as claimed in Claim 1, **characterized in that** the permanent magnet (34; 44, 45), the core (35), the armature (25), and the yoke (33) are so designed that the magnetic flux is guided along a first path, when the armature (25) is in the first stable position, the first path of the magnetic flux maintaining the armature (25) in the first stable position, and is guided along a second path, when the armature (25) is in the second stable position, the second path of the magnetic flux maintaining the armature (25) in the second stable position.

3. A valve as claimed in Claim 1 or 2, **characterized by** having no springs for determining either the first or second stable position.

4. A valve as claimed in any one of the foregoing Claims, **characterized in that** the permanent magnet (34; 44, 45) is substantially on a level with the auxiliary shutter (24) along said axis (A); the auxiliary shutter (24) being located at the free end of the armature (25).

5. A valve as claimed in any one of the foregoing Claims, **characterized in that** the core (35) is of a length, along said axis (A), greater than the length of the armature (25) along said axis (A).

6. A valve as claimed in Claim 5, **characterized in that** the length of the core (35) is substantially one and a half times the length of the armature (25) along said axis (A).

7. A valve as claimed in any one of the foregoing Claims, **characterized in that** the distance between the second and third magnetic pole (P2, P3) is much smaller than the distance between the first and second magnetic pole (P1, P2).

8. A valve as claimed in any one of the foregoing Claims, **characterized in that** the position of the first and second magnetic pole (P1, P2) along said axis (A) is selected as a function of the length of the armature along said axis (A), and so that, when the armature (25) is in the first stable position, the magnetic flux through the second magnetic pole (P2) is negligible with respect to the magnetic flux through the first and third magnetic pole (P1, P3), and, when the armature (25) is in the second stable position, the magnetic flux through the first magnetic pole (P1) is negligible with respect to the magnetic flux through the second and third magnetic pole (P2, P3).

9. A valve as claimed in any one the foregoing Claims, **characterized in that** the first, second, and third magnetic poles (P1, P2, P3) are defined by inner faces (41, 42, 43; 41, 42, 49) of respective first, second, and third rings (38, 39, 40; 38, 39, 46).

10. A valve as claimed in Claim 9 **characterized in that** the third ring (40; 46) has an outside diameter smaller than the outside diameter of the first and second ring (38, 39).

11. A valve as claimed in Claim 9 or 10, **characterized in that** the permanent magnet (34) is defined by a magnetic ring gripped between the second and third ring (39, 40).

12. A valve as claimed in Claim 9 or 10, **characterized in that** the permanent magnet (44, 45) comprises two magnetic rings gripped between the second and third ring (39, 46).

13. A valve as claimed in Claim 11 or 12, **characterized in that** the magnetic ring has an outside diameter equal to the outside diameter of the first and second ring (38, 39).

14. A valve as claimed in Claim 11 or 12, **characterized in that** the magnetic ring has an inside diameter much smaller than the inside diameters of the first, second, and third ring (38, 39, 40; 38, 39, 46).

15. A valve as claimed in Claim 9, **characterized in that** the third ring (46) has an L-shaped cross section.

## Patentansprüche

1. Flüssigkeitsstrom-Schaltventil mit einer bistabilen elektromagnetischen Steueranordnung (2), wobei das Ventil einen Hilfskanal (14, 19, 20, 23); und einen Hilfsverschluss (24), der durch die elektromagnetische Steueranordnung (2) betätigt wird, um den Strom längs des Hilfskanals (14, 19, 20, 23) wahlweise zu unterbrechen, umfasst; wobei die elektromagnetische Steueranordnung (2) ihrerseits ein Joch (33); eine Spule (32), die mit dem Joch (33) zusammenwirkt; einen Kern (35) in der Spule (32); einen Permanentmagneten (34; 44, 45), der mit dem Joch (33) zusammenwirkt; und einen Anker (25), der längs einer Achse (A) zwischen einer ersten stabilen Position, in der er mit dem Kern (35) in Kontakt ist, und einer zweiten stabilen Position, in der sich der Anker (25) in einem Abstand von dem Kern (35) befindet, beweglich ist, umfasst; wobei das Joch (33) einen ersten Abschnitt (37, 38, 39), der um die Spule (32) angebracht ist und im Gebrauch einen ersten und einen zweiten Magnetpol (P1, P2) definiert; und einen zweiten Abschnitt (40; 46), der von dem ersten Abschnitt durch den Permanentmagneten (34; 44, 45) getrennt ist und einen dritten Magnetpol (P3) definiert, umfasst, wobei der erste, der zweite und der dritte Magnetpol (P1, P2, P3) längs der Achse (A) von dem Kern (35) zu dem Anker (25) nacheinander angeordnet sind, wobei das Ventil **dadurch gekennzeichnet ist, dass** der erste Magnetpol (P1) dem Kern (35) zugewandt ist, der zweite Magnetpol (P2) dem Anker (25) zugewandt ist und der dritte Magnetpol (P3) weder dem Kern (35) noch dem Anker (25) zugewandt ist, so dass die erste und die zweite stabile Position lediglich durch den magnetischen Fluss, der durch den Permanentmagneten (34; 44, 45) erzeugt wird und als Funktion der Position des Ankers (25) wahlweise durch das Joch (33), den Kern (35) und den Anker (25) geleitet wird, aufrechterhalten werden.

2. Ventil nach Anspruch 1, **dadurch gekennzeichnet, dass** der Permanentmagnet (34; 44, 45), der Kern (35), der Anker (25) und das Joch (33) so entworfen sind, dass der magnetische Fluss längs eines ersten Wegs geführt wird, wenn sich der Anker (25) in der ersten stabilen Position befindet, wobei der erste Weg des magnetischen Flusses den Anker (25) in der ersten stabilen Position hält, und längs eines zweiten Wegs geführt wird, wenn sich der Anker (25) in der zweiten stabilen Position befindet, wobei der zweite Weg des magnetischen Flusses den Anker (25) in der zweiten stabilen Position hält.

3. Ventil nach Anspruch 1 oder 2, **dadurch gekennzeichnet, dass** es keine Federn besitzt, um die erste und/oder die zweite stabile Position festzulegen.

4. Ventil nach einem der vorhergehenden Ansprüche, **dadurch gekennzeichnet, dass** sich der Permanentmagnet (34; 44, 45) im Wesentlichen auf einer Höhe mit dem Hilfsverschluss (24) längs der Achse (A) befindet; wobei sich der Hilfsverschluss (24) an dem freien Ende des Ankers (25) befindet.

5. Ventil nach einem der vorhergehenden Ansprüche, **dadurch gekennzeichnet, dass** der Kern (35) längs der Achse (A) eine Länge besitzt, die größer als die Länge des Ankers (25) längs der Achse (A) ist.

6. Ventil nach Anspruch 5, **dadurch gekennzeichnet, dass** die Länge des Kerns (35) im Wesentlichen gleich der eineinhalbfachen Länge des Ankers (25) längs der Achse (A) ist.

7. Ventil nach einem der vorhergehenden Ansprüche, **dadurch gekennzeichnet, dass** der Abstand zwischen dem zweiten und dem dritten Magnetpol (P2, P3) viel kleiner ist als der Abstand zwischen dem ersten und dem zweiten Magnetpol (P1, P2).

8. Ventil nach einem der vorhergehenden Ansprüche, **dadurch gekennzeichnet, dass** die Positionen des ersten und des zweiten Magnetpols (P1, P2) längs der Achse (A) als eine Funktion der Länge des Ankers längs der Achse (A) gewählt sind, und dass dann, wenn sich der Anker (25) in der ersten stabilen Position befindet, der magnetische Fluss durch den zweiten Magnetpol (P2) in Bezug auf den magnetischen Fluss durch den ersten und den dritten Magnetpol (P1, P3) vernachlässigbar ist und dass dann, wenn sich der Anker (25) in der zweiten stabilen Position befindet, der magnetische Fluss durch den ersten Magnetpol (P1) in Bezug auf den magnetischen Fluss durch den zweiten und durch den dritten Magnetpol (P2, P3) vernachlässigbar ist.

9. Ventil nach einem der vorhergehenden Ansprüche, **dadurch gekennzeichnet, dass** der erste, der zweite und der dritte Magnetpol (P1, P2, P3) durch Innenflächen (41, 42, 43; 41, 42, 49) eines ersten, eines zweiten bzw. eines dritten Rings (38, 39, 40; 38, 39, 46) definiert sind.

10. Ventil nach Anspruch 9, **dadurch gekennzeichnet, dass** der dritte Ring (40; 46) einen Außendurchmesser besitzt, der kleiner als der Außendurchmesser des ersten und des zweiten Rings (38, 39) ist.

11. Ventil nach Anspruch 9 oder 10, **dadurch gekennzeichnet, dass** der Permanentmagnet (34) durch einen magnetischen Ring definiert ist, der zwischen dem zweiten und dem dritten Ring (39, 40) in Eingriff ist.

12. Ventil nach Anspruch 9 oder 10, **dadurch gekennzeichnet, dass** der Permanentmagnet (44, 45) zwei magnetische Ringe umfasst, die zwischen dem zweiten und dem dritten Ring (39, 46) in Eingriff sind.

13. Ventil nach Anspruch 11 oder 12, **dadurch gekennzeichnet, dass** der magnetische Ring einen Außendurchmesser besitzt, der gleich dem Außendurchmesser des ersten und des zweiten Rings (38, 39) ist.

14. Ventil nach Anspruch 11 oder 12, **dadurch gekennzeichnet, dass** der magnetische Ring einen Innendurchmesser besitzt, der viel kleiner als die Innendurchmesser des ersten, des zweiten und des dritten Rings (38, 39, 40; 38, 39, 46) ist.

15. Ventil nach Anspruch 9, **dadurch gekennzeichnet, dass** der dritte Ring (46) einen L-förmigen Querschnitt besitzt.

## Revendications

1. Vanne tout ou rien d'écoulement de liquide équipée d'un ensemble de commande électromagnétique bistable (2), la vanne comprenant un canal auxiliaire (14, 19, 20, 23) ; un obturateur auxiliaire (24) activé par l'ensemble de commande électromagnétique (2) pour arrêter sélectivement l'écoulement le long du canal auxiliaire (14, 19, 20, 23) ; l'ensemble de commande électromagnétique (2) comprenant une culasse (33) ; une bobine (32) associée à ladite culasse (33) ; un noyau (35) situé à l'intérieur de ladite bobine (32) ; un aimant permanent (34 ; 44, 45), associé à ladite culasse (33) ; et une armature (25) mobile le long d'un axe (A) entre une première position stable en contact avec ledit noyau (35) et une seconde position stable dans laquelle ladite armature (25) est à une distance donnée dudit noyau (35) ; la culasse (33) comprenant une première partie (37, 38, 39) montée autour de ladite bobine (32) et définissant à l'usage des premier et deuxième pôles magnétiques (P1, P2) ; et une seconde partie (40 ; 46) séparée de la première partie par l'aimant permanent (34 ; 44, 45) et définissant un troisième pôle magnétique (P3) ; les premier, deuxième et troisième pôles magnétiques (P1, P2, P3) étant disposés successivement le long dudit axe (A) en allant du noyau (35) vers l'armature (25) ; la vanne étant **caractérisée en ce que** le premier pôle magnétique (P1) est face au noyau (35), le deuxième pôle magnétique (P2) est face à l'armature (25) et le troisième pôle magnétique (P3) n'est ni face au noyau (35) ni face à l'armature (25), de sorte que les première et seconde positions stables sont uniquement maintenues par le flux magnétique généré par l'aimant permanent (34 ; 44, 45) et sélectivement dirigées à travers la culasse (33), le noyau (35) et l'armature (25) en fonction de la position de l'armature (25).

2. Vanne selon la revendication 1, **caractérisée en ce que** l'aimant permanent (34 ; 44, 45), le noyau (35), l'armature (25) et la culasse (33) sont conçus de sorte que le flux magnétique soit guidé le long d'un premier trajet, quand l'armature (25) est dans la première position stable, le premier trajet du flux magnétique maintenant l'armature (25) dans la première position stable, et de sorte qu'il soit guidé le long d'un second trajet, quand l'armature (25) est dans la seconde position stable, le second trajet du flux magnétique maintenant l'armature (25) dans la seconde position stable.

3. Vanne selon la revendication 1 ou 2, **caractérisée en ce qu'**elle n'a pas de ressorts pour déterminer la première ou la seconde position stable.

4. Vanne selon l'une quelconque des revendications précédentes, **caractérisée en ce que** l'aimant permanent (34 ; 44, 45) est sensiblement à un même niveau que l'obturateur auxiliaire (24) le long dudit axe (A) ; l'obturateur auxiliaire (24) étant positionné à l'extrémité libre de l'armature (25).

5. Vanne selon l'une quelconque des revendications précédentes, **caractérisée en ce que** le noyau (35) a une longueur, le long dudit axe (A), supérieure à la longueur de l'armature (25) le long dudit axe (A).

6. Vanne selon la revendication 5, **caractérisée en ce que** la longueur du noyau (35) est sensiblement égale à une fois et demie la longueur de l'armature (25) le long dudit axe (A).

7. Vanne selon l'une quelconque des revendications précédentes, **caractérisée en ce que** la distance entre les deuxième et troisième pôles magnétiques (P2, P3) est bien inférieure à la distance entre les premier et deuxième pôles magnétiques (P1, P2).

8. Vanne selon l'une quelconque des revendications précédentes, **caractérisée en ce que** la position des premier et deuxième pôles magnétiques (P1, P2) le long dudit axe (A) est sélectionnée en fonction de la longueur de l'armature le long dudit axe (A), de sorte que, lorsque l'armature (25) est dans la première position stable, le flux magnétique traversant le deuxième pôle magnétique (P2) est négligeable par rapport au flux magnétique traversant les premier et troisième pôles magnétiques (P1, P3), et lorsque l'armature (25) est dans la seconde position stable, le flux magnétique traversant le premier pôle magnétique (P1) est négligeable par rapport au flux magnétique traversant les deuxième et troisième pôles magnétiques (P2, P3).

9. Vanne selon l'une quelconque des revendications précédentes, **caractérisée en ce que** les premier, deuxième et troisième pôles magnétiques (P1, P2, P3) sont définis par des faces internes (41, 42, 43 ; 41, 42, 49) d'un premier, d'un deuxième et d'un troisième anneaux respectifs (38, 39, 40 ; 38, 39, 46).

10. Vanne selon la revendication 9, **caractérisée en ce que** le troisième anneau (40 ; 46) a un diamètre extérieur inférieur au diamètre extérieur des premier et deuxième anneaux (38, 39).

11. Vanne selon la revendication 9 ou 10, **caractérisée en ce que** l'aimant permanent (34) est défini par un anneau magnétique serré entre les deuxième et troisième anneaux (39, 40).

12. Vanne selon la revendication 9 ou 10, **caractérisée en ce que** l'aimant permanent (44, 45) comprend deux anneaux magnétiques serrés entre les deuxième et troisième anneaux (39, 46).

13. Vanne selon la revendication 11 ou 12, **caractérisée en ce que** l'anneau magnétique a un diamètre extérieur égal au diamètre extérieur des premier et deuxième anneaux (38, 39).

14. Vanne selon la revendication 11 ou 12, **caractérisée en ce que** l'anneau magnétique a un diamètre intérieur bien inférieur aux diamètres intérieurs des premier, deuxième et troisième anneaux (38, 39, 40 ; 38, 39, 46).

15. Vanne selon la revendication 9 **caractérisée en ce que** le troisième anneau (46) a une coupe transversale en forme de L.
